(19) Europäisches Patentamt
European Patent Office
Office européen des brevets

(11) Publication number: **0 141 604**
**A2**

(12) **EUROPEAN PATENT APPLICATION**

(21) Application number: **84307238.0**

(22) Date of filing: **19.10.84**

(51) Int. Cl.⁴: **B 29 C 67/14,** B 29 C 53/04
// B29K105:10

(30) Priority: **07.11.83 GB 8329663**

(43) Date of publication of application: **15.05.85**
**Bulletin 85/20**

(84) Designated Contracting States: **AT BE CH DE FR GB IT LI NL SE**

(71) Applicant: **IMPERIAL CHEMICAL INDUSTRIES PLC, Imperial Chemical House Millbank, London SW1P 3JF (GB)**

(72) Inventor: **Cattanach, James Buchan, 3 Gypsy Lane Marton, Middlesbrough Cleveland (GB)**
Inventor: **Jones, Anthony Edward, 34 Harkness Way, Hitchin Hertfordshire (GB)**

(74) Representative: **Downer, John Michael et al, Imperial Chemical Industries PLC Legal Department: Patents PO Box 6 Bessemer Road, Welwyn Garden City Herts, AL7 1HD (GB)**

(54) **Method of forming reinforced thermoplastics composites.**

(57) A method of forming a shaped article from a sheet of fibre reinforced thermoplastic in which the fibres are present as superimposed layers of continuous, optionally woven, aligned fibres comprising placing a sheet, which has been heated to a temperature above the softening temperature of the thermoplastic of the sheet, on a tool and biassing the softened sheet towards the contours of the tool by biassing means which progressively urge the softened sheet from the area of the sheet contacting the tool towards the extremities of the sheet to conform the sheet with the shape of the tool. The method provides a means of shaping reinforced sheet containing continuous inextensible fibres in a manner which reduces buckling of the fibres.

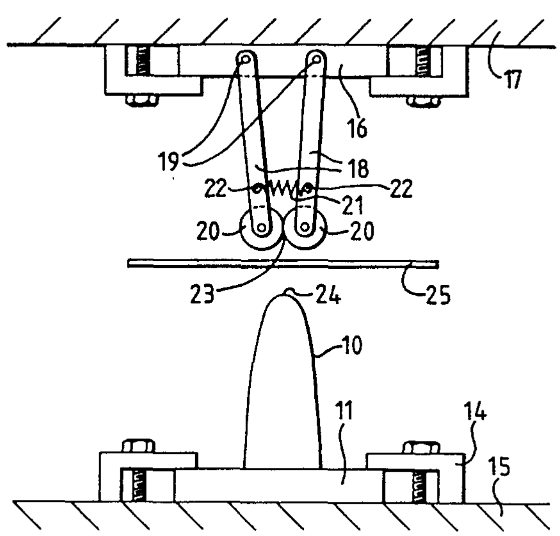


EP 0 141 604 A2

METHOD OF FORMING REINFORCED THERMOPLASTICS COMPOSITES

This invention relates to a method of forming fibre reinforced thermoplastic composites into shaped articles of good surface finish and to an apparatus suitable for performing the method.

There is a strong interest in utilising fibre reinforced thermoplastic compositions in structural applications as replacements for metals because of advantages such as weight saving. This is particularly true in the aircraft and aerospace industries. To meet this need fibre reinforced polymer ccmposites have been under development in which continuous, aligned fibres have been present in the composite. Because of the difficulty of preparing composites in which the fibres are well wetted by the polymer these composites, until recently, were composed of thermosetting polymers. The precursors for these thermosetting polymers are of low viscosity and can wet the reinforcing fibre thoroughly prior to being cured to the polymeric form. Recently, thermoplastic polymer composites having a high volume content of continuous, aligned fibres have been prepared in a manner which permits good fibre wetting. These are disclosed in European patent application No. 56703.

The products described in European Patent Publication No. 56703 are normally obtained as a thin prepreg which for many applications needs to be converted to a thicker sheet. This is achieved by laying up layers of the prepreg with the fibres disposed in chosen directions, in planes through the layers, and pressing the assembly at elevated temperatures to form a consolidated sheet. The prepreg material may, if desired, be woven prior to consolidation.

The fact that the matrix polymer is a thermoplastic polymer gives such composites an advantage over thermoset composites because these thermoplastic composites are

inherently thermoformable and can be repeatedly thermoformed if necessary. However, the nature of the continuous, aligned fibres in these composites makes them difficult to thermoform into articles having a good level of consolidation and surface finish. This difficulty is increased to some extent when the thermoplastic matrix is an aromatic polymer of high softening point. It has been found that when such sheets are thermoformed the continuous, rigid fibres which are subjected to a bending stress resist any stretching and noticeable buckling takes place distorting the surface of the article. A method has now been developed which enables these reinforced composite sheets to be thermoformed with less risk of fibre buckling.

According to the invention there is provided a method of forming a shaped article from a sheet of fibre reinforced thermoplastic in which the fibres are present as superimposed layers of continuous, optionally woven, aligned fibres comprising placing a sheet, which has been heated to a temperature above the softening temperature of the thermoplastic of the sheet, on a tool and biassing the softened sheet towards the contours of the tool by biassing means which progressively urge the softened sheet from the area of the sheet contacting the tool towards the extremities of the sheet to conform the sheet with the shape of the tool.

In a further embodiment a thin foil of pliable material such as a thin metal foil is placed between the heat softened sheet and the biassing means. The presence of the foil has been found to give an improved surface finish suitable metal foils are of aluminium, stainless steel or brass.

The method is very suitable when the shape to be obtained from the reinforced sheet material has a shape such as a parabola.

A suitable biassing means comprises a pair of spring loaded rollers and consequently it is also preferred that the tool, whether male or female should have a surface which can be contacted over substantially the whole of its operative surface by the rollers when the rollers are forced over the tool surface. In order to provide greater latitude in design the spring loaded rollers may be provided with a rigid, but deformable surface, such as a temperature resistant rubber. Whether or not spring loaded rollers are used as the biassing means it is preferred that the shape of the tool is such that it has an operative surface the development of which is a two-dimensional plane surface.

Whether or not an operating surface can be developed or projected into a two-dimensional plane surface can be determined by applying a removable, coherent, flexible coating to the operative surface. If the surface can be developed into a two-dimensional plane surface the coating, after removal, will take up a planar form without wrinkling.

The tool, whether male or female, is advantageously provided with means for heating and cooling the tool, such as internal channels, through which heat transfer liquids can be circulated.

The workpiece to be shaped is normally heated to above the softening point of the polymer of the workpiece in a suitable oven or by other conventional means. The workpiece is then transferred to the tool and the operation of shaping carried out whilst the sheet is still at a temperature in excess of the softening point of the polymer of the sheet. It is usually advantageous to heat the tool to an elevated temperature, either by the use of the heating means integral with the tool or simply by placing the tool in an oven. The temperature of the tool during the shaping operation should preferably be below that of the workpiece being shaped.

The invention will now be described with reference to the accompanying drawings.

Figure 1 of the accompanying drawings is a perspective view of a male tool for use in the invention.

Figure 2 is an end view of an apparatus suitable for forming a reinforced polymer sheet to conform with the shape of male tool of Figure 1.

Figure 3 shows the same end view after the sheet has been shaped.

In Figure 1 a male tool 10 is provided with a base plate 11 for clamping to the platen of a press (not shown). The male tool 10 is of parabolic shape about the line A-A and is of constant cross-sectional shape in planes parallel to face 12 of the tool. The development of the operative surface 13 of the tool is of plane, rectangular shape.

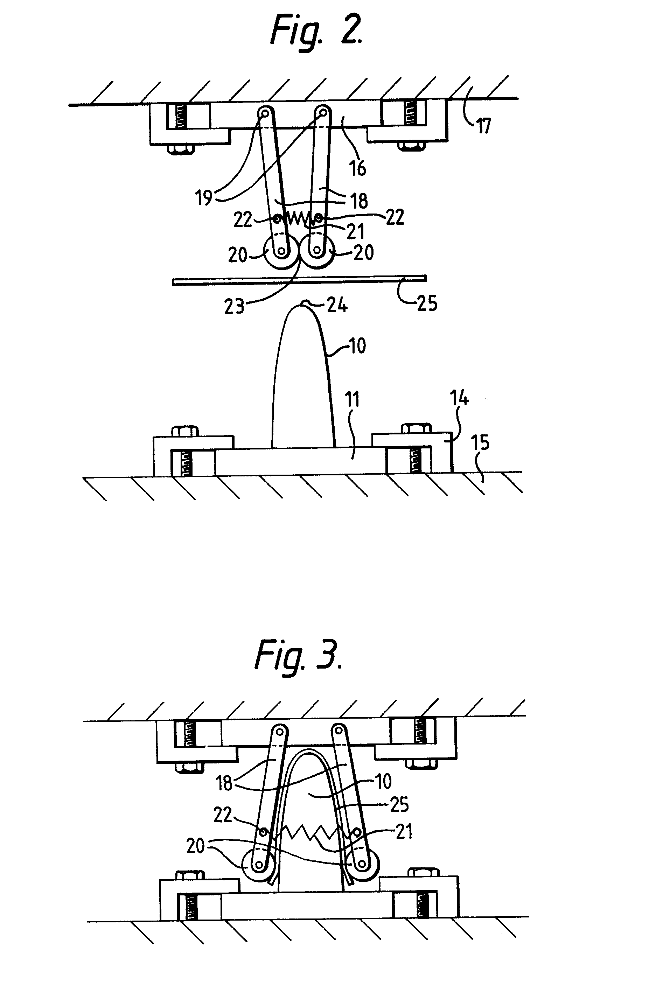

In Figure 2 male tool 10 is clamped by means of base plate 11 and clamp pieces 14 to a fixed platen 15. A base plate 16 is clamped to upper platen 17. On each side of the base plate 16 a pair of pivot arms 18 are pivotably attached to the base plate 16 through pivot pins 19. Each of the ends of arms 18, remote from pins 19, are rotatably connected to a pair of rollers 20. The ends of rollers 20 remote from those shown in Figure 2 are also rotatably connected to the corresponding pair of pivot arms (not shown) on the other side of the base plate 16. The ends of each pair of pivot arms carrying the rollers are biassed towards each other by a pair of coil springs 21 secured to studs 22 on the pivot arms. The assembly of pivot arms and rollers is positioned so that the cusp 23 formed by the contacting rollers is vertically above the tip 24 of the parabola of the male tool. A workpiece sheet 25 is plated over the parabola after the sheet has been prepared for shaping.

The operation of the apparatus will now be described with reference to the shaping of a sheet of continuous carbon fibre reinforced polyetheretherketone (PEEK), a high performance polymer obtainable from Imperial Chemical Industries PLC and having the repeat unit:

-Ph-O-Ph-CO-Ph-O-

where PH is a phenylene unit. A rectangular sheet of carbon fibre reinforced PEEK having a thickness of 1 mm, comprising superimposed layers of impregnated, aligned, continuous carbon fibres, the layers having been laid up so that the carbon fibres are disposed successively in directions at 0°, 45°, 90° and -45° to a longitudinal direction of the sheet, was heated in an oven maintained at 400°C until a sheet temperature of about 400°C was reached (about 40 sec). The male mould was clamped to the lower platen and heated to 150°C. The sheet was then placed centrally over the male mould, with the 0°C direction of the fibre layers positioned transverse to the line running along the tip 24 of the parabola. The upper platen was steadily lowered, over a period of about 3 seconds, to the position shown in Figure 3 the pair of rollers being forced open against the resistance of the springs 21 by the male tool. The upper platen was raised and the shaped sheet released from the tool. The shaped sheet produced had a good surface except at the tip of the parabola which had not been contacted by the roller surfaces. A substantial improvement in surface smoothness was achieved in a repeat experiment in which an aluminium foil 0.15 mm thick was interposed between the heated sheet and the roller prior to lowering the upper platen. The shaped sheet produced had an excellent surface finish with no sign of creasing on the inside surface of the parabola. Examination of the shaping also indicated that there was

evidence of the layers of carbon fibres had been subjected to interlaminar slippage and it is believed that the good surface finish derives from the interlaminar slippage.

Although the shaping produced using the apparatus described with reference to the drawings has a constant parabolic cross-section it is clear that with appropriately shaped tools shapings of different cross section can be obtained. It is not necessary that the tool is of constant cross section, for example a tapered tool may be used to provide a tapered shaping. When a tapered tool is used it is necessary to provide appropriate biassing means. For example, where the biassing means is a pair of rollers they should be disposed so the axes of the rollers are respectively parallel to the tapered faces of the tool.

CLAIMS

1. A method of forming a shaped article from a sheet of fibre reinforced thermoplastic in which the fibres are present as superimposed layers of continuous aligned fibres comprising placing a sheet, which has been heated to a temperature above the softening temperature of the thermoplastic of the sheet, on a tool and biassing the softened sheet towards the contours of the tool by biassing means which progressively urge the softened sheet from the area of the sheet contacting the tool towards the extremities of the sheet to conform the sheet with the shape of the tool.

2. A method according to claim 1 in which the biassing means comprises a pair of spring loaded rollers.

3. A method according to either of claims 1 and 2 in which a pliable foil is positioned between the heat softened sheet and the biassing means.

4. A method according to claim 3 wherein the pliable foil is a foil of aluminium, stainless steel or brass.

5. A method according to any one of the preceding claims in which the sheet of fibre reinforced plastic comprises superimposed prepregs containing continuous aligned fibres which are layed up with the fibres disposed in chosen directions in planes through the sheet.

6. A method according to any one of claims 1 to 4 in which the sheet comprises superimposed layers of continuous aligned fibres which are interwoven.

7. A method according to any one of the preceding claims in which the thermoplastic of the sheet is an aromatic polymer.

Fig. 1.

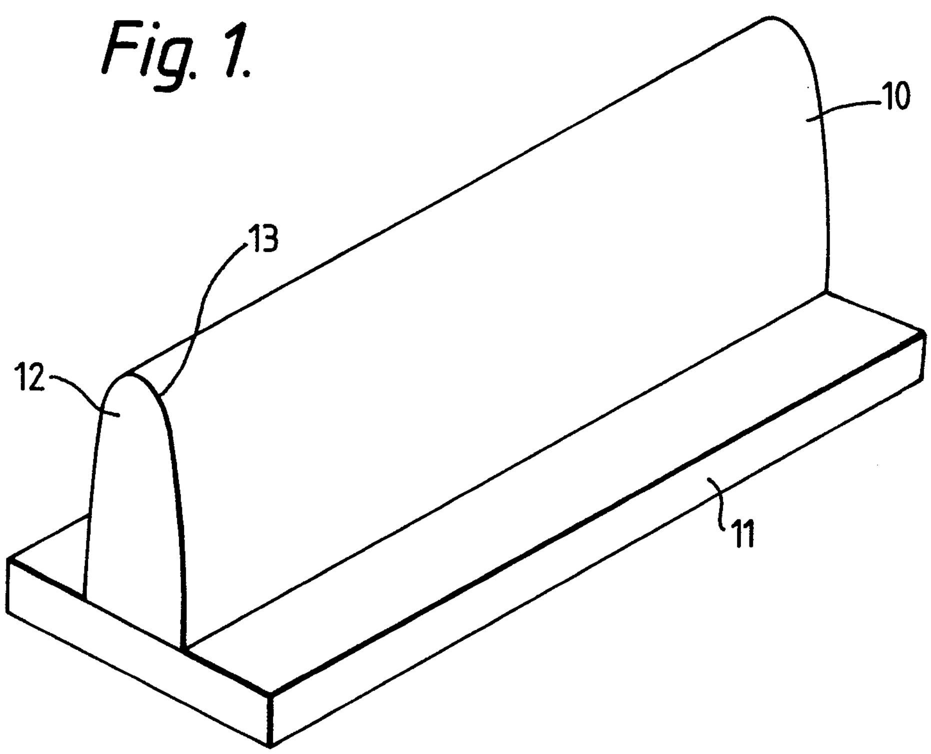

Fig. 2.

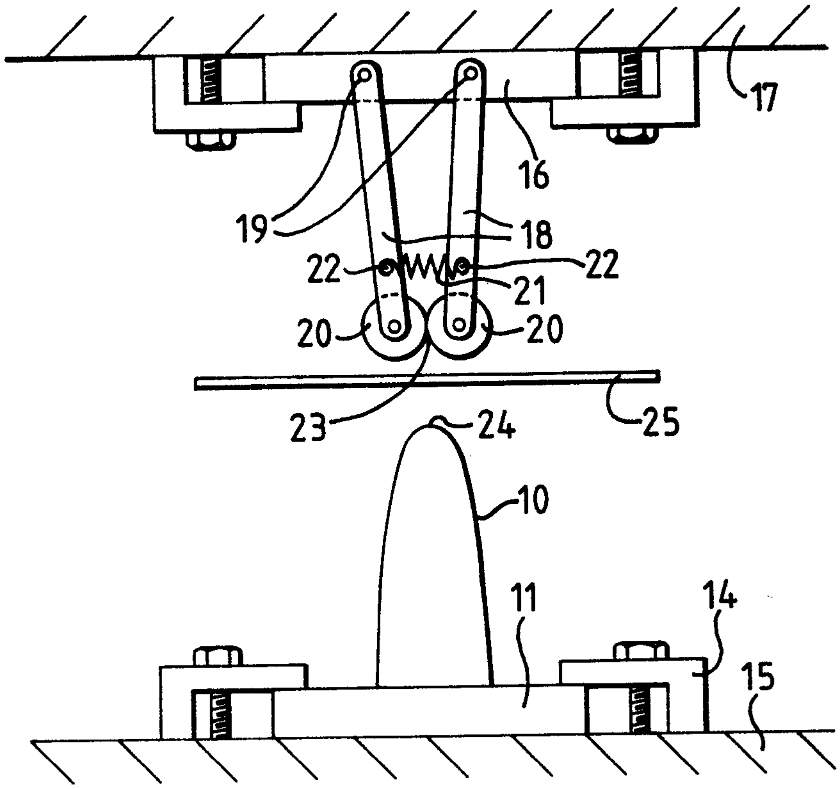


Fig. 3.